# EUROPEAN PATENT SPECIFICATION

(11) **EP 2 566 351 B1**
(45) Date of publication and mention of the grant of the patent: **19.03.2014**
(21) Application number: 12710787.8
(22) Date of filing: 08.02.2012
(51) Int. Cl.: A23L 1/217, A23L 1/18

(54) **FOOD PRODUCT COMPRISING A MIXTURE OF SLICES OF POTATOES COOKED IN OIL AND CORNS PUFFED UP WHEN HEATED**
LEBENSMITTELPRODUKT MIT EINER MISCHUNG AUS IN ÖL GEKOCHTEN KARTOFFELSCHEIBEN UND BEI DER ERHITZUNG AUFGEBLÄHTEN GETREIDEN
PRODUIT ALIMENTAIRE COMPRENANT UN MÉLANGE DE TRANCHES DE POMME DE TERRE CUITES DANS L'HUILE ET DE MAÏS SOUFFLÉS PAR CHAUFFAGE

(30) Priority: 21.02.2011 IT BZ20110001 U
(43) Date of publication of application: 13.03.2013
(73) Proprietor: Perini, Oscar, 38015 Lavis (Trento) (IT)
(72) Inventor: Perini, Oscar, 38015 Lavis (Trento) (IT)
(74) Representative: Gotra, Stefano
(86) International application number: PCT/IB2012/050562
(87) International publication number: WO 2012/114221

(56) References cited:
- CA-A1- 2 346 964
- US-A- 3 647 474
- US-A- 3 988 484
- US-A- 5 942 273

## Description

The object of the present invention is a food product comprising a mixture of slices of potatoes cooked in oil and corns puffed up when heated.

Today, the salty snacks market offers a multitude of products varying in composition, shape and packaging. Among the traditional salty snacks that have now been present on the market for decades, we mention:
- the packages of classic "potato chips", that is, slices of potatoes cooked in oil and salt;
- the packages of popcorn, that is, corns puffed up when heated and with added oil and salt.

US 3647474 discloses a snack food product comprising a cooked food piece formed from a mixture of comminuted popped popcorn in a dough matrix containing tapioca flour, corn flour and potato starch, the ratio of popped popcorn to dough matrix being from 1 to 1 to 3 to 1 by weight. Said product is deep fat fried.

To understand the invention fully, brief mention of the physiology of the digestion of glucides, and particularly the digestion of cooked starches, which are the main nutrient in potato chips and popcorn, is held to be useful. Up to even 50% of the digestion of starches begins and takes place in the mouth by means of an enzyme: salivary amylase. The system controlling salivary secretion is complex, in that it depends on various factors: the amount of foods introduced in the mouth, their biochemical composition and their organoleptic characteristics, the amount of time the food remains in the mouth, etc. The secretion of saliva is in fact related to mechanical reflexes and to olfactory, gustatory and visual stimuli.

Once chewed, the bolus is swallowed and arrives in the stomach where the action of the acidic substances is not instantaneous: amylase continues its action until it is deactivated by the acids themselves.

The consumption of potato chips and popcorn involves dietetic-alimentary issues relating to the difficult digestibility thereof.

In this context, the technical task on which the present invention is based, is to propose a food product comprising a mixture of slices of potatoes cooked in oil and corns puffed up when heated that overcomes the drawbacks of the prior art as cited hereinabove.

In particular, an aim of the present invention is to propose a food product comprising a mixture of slices of potatoes cooked in oil and corns puffed up when heated, that proves to be more digestible and assimilable with respect to traditional potato chips and to popcorn.

The defined technical task and the specified aims are substantially achieved by a food product comprising a mixture of slices of potatoes cooked in oil and corns puffed up when heated, comprising the technical characteristics stated in one or more of the appended claims.

Further characteristics and advantages of the present invention will become more apparent from the approximate, and hence non-limiting, description of a preferred, but not exclusive, embodiment of a food product comprising a mixture of slices of potatoes cooked in oil and corns puffed up when heated.

The proposed food product comprises a mixture of slices of potatoes cooked in oil (potato chips) and corns puffed up when heated (popcorn). Preferably, the mixture comprises salt (iodized or non-iodized) as well.

The slices of potatoes are present in a percentage by weight ranging approximately from 55% to 85% of the total weight of the food product, whereas the corns are present in a percentage by weight ranging approximately from 15% to 45% of the total weight of the food product. Preferably, the slices of potatoes are present in a percentage by weight ranging approximately from 60% to 70% of the total weight of the food product, whereas the corns are present in a percentage by weight ranging approximately from 30% to 40% of the total weight of the food product.

More preferably, the slices of potatoes and the corns are present in a substantially identical percentage by volume. At the practical level, however, it proves to be easier to carry out assessments by weight rather than assessments by volume. In particular, if the slices of potatoes are present in a percentage by weight that is approximately twice that of the corns, the volumes of potatoes and corns are substantially comparable. In other words, the slices of potatoes are preferably present in a percentage by weight of about 66% of the total weight of the food product, whereas the corns are present in a percentage by weight of about 33% of the total weight of the food product.

The mixing of potato chips and popcorn renders the food product thus obtained more digestible with respect to traditional potato chips and to popcorn. This property has been demonstrated in a thorough manner by the following laboratory trials.

A first trial consisted in a sensory analysis based on the comparison between three samples: a sample of potato chips, a sample of popcorn and a sample of the food product proposed herein. For each one of the three samples, the number of chews required to achieve a consistency such as to be swallowed, was recorded.

The samples were served at ambient temperature in containers covered in such a manner as to protect them from ambient moisture.

The trial was carried out following the "Tests using scales" method (ISO standard 4121:2003) and saw the participation of 30 assessors trained in the application of sensory analysis. Each assessor was presented with three samples in an order of presentation established by FIZZ software (Biosystem). For each sample, the assessors were asked to put it in their mouth and count the number of chews until swallowing it. To neutralize residual sensations between the tasting of one sample and the next, the assessors utilized still mineral water. The trial was carried out in three sessions and the reliability of the results obtained was checked by means of the two-way and two-factor analysis of variance, with interactions.

The means and relative standard deviations (uncertainties of the measurement) are expressed in the following table:

| sample | potato chips | popcorn | proposed food product |
|---|---|---|---|
| mean | 20 | 18 | 23 |
| standard deviation | 5.4 | 5.5 | 6.0 |

It emerged from this trial that the number of chews required was equal to 20 for the potato chips, 18 for the popcorn and 23 for the proposed product. The increase in the number of chews required in order to be able to swallow the proposed product determines an increase in the salivary stimulus owing to both the increase in motor activity and the protraction of the duration of contact between the bolus and the buccal mucosa, with a consequent increase in the duration of permanence in the mouth at a pH near neutrality. This pH is ideal for the functioning of the amylase enzyme in the digestion of cooked starch. All of this is related to the complementary organoleptic characteristics of potato chips and popcorn, which, both being present in the proposed product, determine the formation of a bolus of greater volume, greater consistency on chewing, that remains in the mouth longer (as will be demonstrated in the following trials) and stimulates salivary secretion. As a result, there is an increment in the digestive process carried out precisely by the salivary amylase. For this reason, the food product being proposed herein proves to be more digestible and assimilable, with respect to potato chips and popcorn consumed separately. A second trial concerned the comparative evaluation of the three samples in terms of homogeneity and consistency.

Homogeneity was assessed following mincing with a laboratory mixer, which simulates the mastication process. The mixer was activated at speed 2 for 20 seconds.

Mincing of the potato chips created a sticky mass that was prevalently homogenous and with some parts having the tendency to become compact.

Mincing of the popcorn created a substantially homogenous mass.

Mincing of the proposed product created a mass that was prevalently homogenous and non-adhesive. The presence of the potato chips does not permit the achievement of the homogeneity obtained for the sample of popcorn alone, whereas the absence of adhesivity is determined precisely by the presence of the popcorn, which completely eliminates or reduces the stickiness of the potato chips.

The consistency of the minced samples was evaluated following the addition of water in a pre-established proportion (1 portion of the minced sample : 5 portions of water), which simulates the mixture of the samples with saliva. In fact, saliva is a liquid composed of 99% water.

The minced samples with water added were left at ambient temperature for about 10 minutes.

Following this, it was observed that the potato chips absorbed all of the water, giving rise to a hardened mixture.

The popcorn absorbed only part of the water added, whereas the remaining part remained free inside the mixture. The mixture thus obtained was sticky, slippery and soft.

The proposed product manifested a tendency to hardening, due to the presence of the potato chips; however, fairly bulky pieces of popcorn remained undissolved and evident in the mixture. In practice, in the proposed product the breaking-up of the popcorn into a sticky, slippery and soft mixture is prevented and the tendency of the potato chips to become compact is prevented. All of this has an important impact regarding digestion, as will be stated herein below.

The instrument used for measurement of the consistency was the Bostwick consistometer, which is typically used to measure the consistency of mixtures that are not uniform (e.g. tomato purees with whole pieces of tomato, yoghurt with pieces of fruit, etc).

The Bostwick consistometer is essentially an inclined plane on which a pre-established volume of the mixture to be tested is applied to slide down. Recording the distance covered within the time interval, empirical measurements regarding the consistency of mixtures are obtained.

The consistency measurement results are reported in the following table:

| sample | mixture of minced potato chips and water | mixture of minced popcorn and water | mixture of the proposed food product and water |
|---|---|---|---|
| time (min.) | 4 | 4 | 4 |
| distance covered (cm) | 2 | 11 | 6.4 |

The mixture of potato chips proved to be very compact, having covered just a short distance (2 cm).

The mixture of popcorn was instead much more fluent and was therefore capable of sliding down a decidedly longer tract (11 cm). Sliding was facilitated by the presence of water that had not bound.

The consistency of the mixture of the proposed product fell at midpoint between that of the potato chips and that of the popcorn: the product proved to have less consistency than the potato chip mixture, but was more compact and uniform than the popcorn mixture (water is retained by the mixture). As already stressed hereinabove, the mixture of the proposed product is more permeable to liquids and it is capable of retaining them, owing to the fact that the consistency and structure of the proposed product are such that they limit the breaking-up of the popcorn and limit the tendency of the potato chips to become compact. In the mouth, this translates into a bolus of greater volume, with greater consistency on chewing, that is more permeable to saliva, that mixes better with the latter and is capable of retaining it. This entails an increase in the amount of time it remains in the mouth at a pH near neutrality, which is ideal for the functioning of amylase.

On the contrary, the fact that the popcorn mixture is soft and slippery, makes it difficult to chew and hardly capable of retaining saliva (and thus poorly digestible).

On the other hand, the compactness of the potato chip mixture makes it more difficult for saliva to penetrate inside it, and for chewing as well.

A third trial served to verify the presence of starch in the samples and its availability within the mixtures defined hereinabove.

For this purpose, an N/4 iodine solution was used, this solution having the capacity to bind with starch. Binding with the starch, the iodine brings about a blue-violet colouring.

Once the mixture to be analyzed was prepared (as in the second trial), it was sent to the departure reservoir of the Bostwick consistometer, where 6 ml of the iodine solution was added.

The behaviours of the three mixtures during the third trial are described below.

In the case of the mixture of potato chips and water, the addition of the iodine solution in the reservoir revealed only superficial diffusion of the solution, due to the compactness of the mixture that blocked penetration of the liquids.

Upon the opening of the Bostwick consistometer gate, which signals the beginning of the descent of the mixture along the sloped plane, there was a descent of the iodine solution, which was not retained by the mixture. Even after mixing, uncoloured zones remained, indicating that the iodine did not bind with the starch in the potato chips.

In the case of the mixture of popcorn and water, 1 minute after the opening of the Bostwick consistometer gate, it was noted that the iodine had partly transferred into the unbound water, maintaining its original colour. The colouration was limited to the peripheral areas, where the starch was bound to the iodine. Instead, in the central area, the light colouration of the mixture was maintained. After spreading the mixture with a spoon, the absence of colouration of the starch was instead revealed in the central part. In practice, the iodine was unable to penetrate the innermost layers because it was lost with the unbound water.

In the case of the mixture of the proposed product with water, when it was in the reservoir, there was already penetration of the iodine solution in the innermost layers of the mixture; this penetration was even more evident 1 minute after the opening of the Bostwick consistometer gate. After spreading the mixture with a spoon, a complete and uniform distribution of the iodine colouration was obtained on the starch in the entire mixture. In practice, a structure of the proposed product is formed such as to permit the penetration of liquids, which are then retained inside it by the lattice structure made up of the minced popcorn and potato chips, and they are free to circulate there uniformly.

In conclusion, starch is present in all three samples, but its availability in terms of being reached by the iodine solution is different.

The second and third trials have actually demonstrated that the food product proposed here offers a greater availability of the starch to be broken down by salivary amylase. As a result, the proposed product is more assimilable and digestible, though without relinquishing its appetizing appeal, a crucial factor in purchasing and in consumption.

This particular characteristic is achieved owing to the mixing of potato chips and popcorn, which are products with organoleptic characteristics that are complementary to each other: the potato chips are hard, crispy and free of air, and once minced, they enter the soft parts of the popcorn, which is indeed tender, rich in air, and sticky.

From the tests performed, the characteristics of the proposed food product, according to the present invention, prove to be clear, just as the advantages prove to be clear.

The results obtained in all three of the trials carried out, are hereby confirmed for several combinations of potato chips and popcorn, however, always within the percentages by weight of 55%-85% for the potato chips and 15%-45% for the corns.

The best result is obtained when the percentages by volume of potato chips and popcorn are substantially identical. In terms of weight, this means that the potato chips are present with a weight that is approximately twice that of the popcorn.

## Claims

1. Food product **characterized in that** it comprises a mixture of slices of potatoes cooked in oil and popcorn, said slices of potatoes being potato chips and being present in a percentage by weight ranging approximately from 55% to 85% of the total weight of the food product and said pop-corn being present in a percentage by weight ranging approximately from 15% to 45% of the total weight of the food product.

2. Food product according to claim 1, wherein said slices of potatoes are present in a percentage by weight ranging approximately from 60% to 70% of the total weight of the food product and said pop-corn are present in a percentage by weight ranging approximately from 30% to 40% of the total weight of the food product.

3. Food product according to claim 1, wherein said slices of potatoes and said pop-corn are present in percentages by volume that are substantially identical.

4. Food product according to claim 3, wherein said slices of potatoes are present in a percentage by weight that is approximately twice that of the pop-corn.

## Patentansprüche

1. Lebensmittelprodukt, **dadurch gekennzeichnet, dass** es eine Mischung aus in Öl gekochten Kartoffelscheiben und Popcorn umfasst, wobei die Kartoffelscheiben Kartoffelchips sind und in einem Gewichtsanteil vorhanden sind, der von ca. 55 % bis 85 % des Gesamtgewichts des Lebensmittelprodukts reicht, und wobei das Popcorn in einem Gewichtsanteil vorhanden ist, der von ca. 15 % bis 45 % des Gesamtgewichts des Lebensmittelprodukts reicht.

2. Lebensmittelprodukt nach Anspruch 1, wobei die Kartoffelscheiben in einem Gewichtsanteil vorhanden sind, der von ca. 60 % bis 70 % des Gesamtgewichts des Lebensmittelprodukts reicht, und wobei das Popcorn in einem Gewichtsanteil vorhanden ist, der von ca. 30 % bis 40 % des Gesamtgewichts des Lebensmittelprodukts reicht.

3. Lebensmittelprodukt nach Anspruch 1, wobei die Kartoffelscheiben und das Popcorn in Volumenanteilen vorhanden sind, die im Wesentlichen identisch sind.

4. Lebensmittelprodukt nach Anspruch 3, wobei die Kartoffelscheiben in einem Gewichtsanteil vorhanden sind, der ca. dem doppelten des Popcorns entspricht.

## Revendications

1. Produit alimentaire **caractérisé en ce qu'**il comprend un mélange de tranches de pomme de terre cuites dans l'huile et de maïs soufflé, lesdites tranches de pomme de terre étant des chips et étant présentes approximativement en pourcentage en poids de 55 % à 85 % du poids total du produit alimentaire et ledit maïs soufflé étant présent approximativement en pourcentage en poids de 15 % à 45 % du poids total du produit alimentaire.

2. Produit alimentaire selon la revendication 1, dans lequel lesdites tranches de pomme de terre sont présentes approximativement en pourcentage en poids de 60 % à 70 % du poids total du produit alimentaire et ledit maïs soufflé étant présent approximativement en pourcentage en poids de 30 % à 40 % du poids total du produit alimentaire.

3. Produit alimentaire selon la revendication 1, dans lequel lesdites tranches de pomme de terre et ledit maïs soufflé sont présents dans des pourcentages en volume étant substantiellement identiques.

4. Produit alimentaire selon la revendication 3, dans lequel lesdites tranches de pomme de terre sont présentes en pourcentage en poids étant approximativement égal au double de celui du maïs soufflé.
